# EUROPEAN PATENT SPECIFICATION

(11) **EP 1 743 748 B1**
(45) Date of publication and mention of the grant of the patent: **13.08.2008**
(21) Application number: 06013253.7
(22) Date of filing: 27.06.2006
(51) Int. Cl.: B25J 19/00

(54) **Guiding structure comprising a flexible tabular guide member for an umbilical member of an industrial robot**
Führungsvorrichtung mit einem flexiblen flachen Führungselement für eine Versorgungsleitung in einem Industrieroboter
Structure de guidage comprenant un élément de guidage flexible et plat pour un câble ombilical d'un robot industriel

(30) Priority: 14.07.2005 JP 2005206093
(43) Date of publication of application: 17.01.2007
(73) Proprietor: FANUC LTD, Minamitsuru-gun, Yamanashi 401-0597 (JP)
(72) Inventor: Inoue, Toshihiko, Fujiyoshida-shi Yamanashi 403-0017 (JP); Nakayama, Kazutaka, Minamitsuru-gun Yamanashi 403-0023 (JP); Iwayama, Takatoshi Room 12-203, Minamitsuru-gun Yamanashi 401-0511 (JP); Motokado, Tomoyuki Room 10-305, Minamitsuru-gun Yamanashi 401-0511 (JP); Abiko, Shunsuke, -mura Minamitsuru-gun Yamanashi 401-0511 (JP)
(74) Representative: Thum, Bernhard

(56) References cited:
- EP-A- 1 598 154
- DE-U1- 9 217 659
- DE-U1- 20 203 095
- DE-U1- 29 720 048
- US-B1- 6 230 859

## Description

### BACKGROUND OF THE INVENTION

### 1. Field of the Invention

This invention relates to an industrial robot comprising an umbilical member handling structure, in which umbilical members connected to a working tool mounted at the forward end of a robot arm are arranged along the robot arm.

### 2. Description of the Related Art

In the conventional umbilical member handling structure for an industrial robot in which a cable harness constituting the umbilical members, connected to a working tool capable of changing its position and posture, are arranged along the upper part of the robot arm a large motion of a wrist element of the robot arm destabilizes the behavior of the cable harness and often causes interference between the cable harness and the surrounding parts or a tension is exerted on the cable harness, resulting in disconnection or damage. In the actual work using an arc welding robot, for example, the welding work is sometimes conducted by moving a welding torch constituting a working tool into a narrow space between a work or a jig and the peripheral devices. In such a case, the problem is posed that a torch cable, loosely arranged on the upper part of the robot arm, interferes with the surrounding parts by the motion of the welding torch.

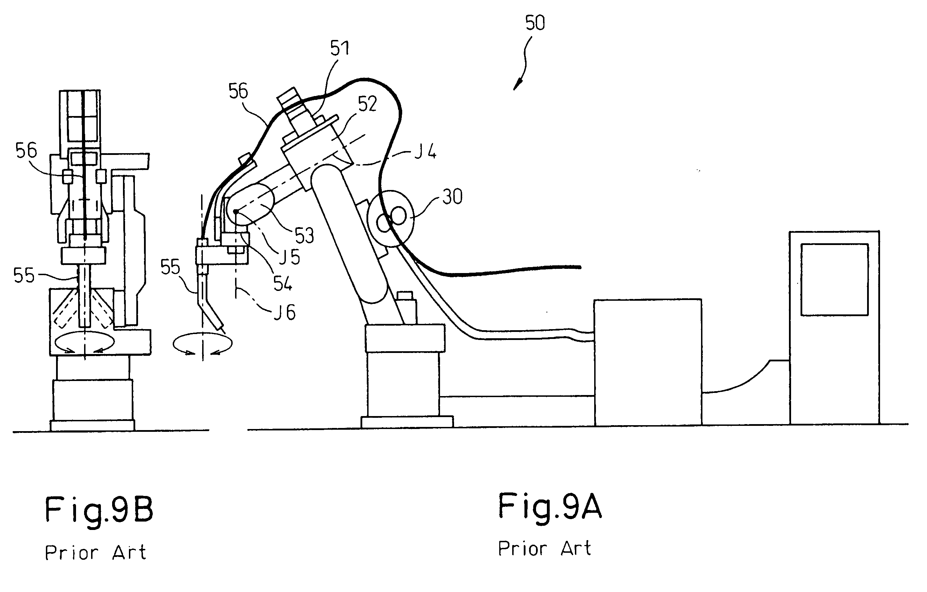

In order to prevent interference with the surrounding parts, a technique for stabilizing the behavior of the torch cable has been proposed in which, as shown in Figs. 9A, 9B, a linear guide 51 having a spring balancer (not shown) is mounted on a forearm 52 of a multijoint arc welding robot 50 having 6-axis freedom.

As shown in Figs. 9A, 9B, the arc welding robot 50 includes a first wrist element 53 arranged at the forward end of a forearm 52 constituting a robot arm and rotatable around a first axis J4 along the length of the forearm, a second wrist element 54 arranged at the forward end of the first wrist element 53 and rotatable around a second axis J5 substantially perpendicular to the first axis J4, and a welding torch 55 arranged adjacent to the second wrist element 54 and rotatable around an axis parallel to, and offset by a predetermined amount from, a third axis J6 constituting the last robot axis substantially perpendicular to the second axis J5.

The linear guide 51 is mounted on the base (near to the overarm) of the first wrist element 53 and is adapted for reciprocal motion by the drive force of a linear motor, a servo motor and a ball screw combined, or the elastic force of a spring or the like. Specifically, the intermediate portion of the conventional torch cable 56 is held by the linear guide 51 at the upper portion of the base of the forearm 52, and the torch cable 56 is arranged on the welding torch 55 side through the linear guide 51. Thus, in accordance with the motion of the wrist elements, the torch cable 56 reciprocates longitudinally, and the torch cable 56 is expanded upward and/or rearward of the forearm 52 to prevent interference with the surrounding parts.

Another example of an umbilical member handling structure of the arc welding robot of this type is disclosed in Japanese Unexamined Patent Publication No. 2004-223576 (JP-A-2004-223576). This conventional structure includes an umbilical feeder for supplying the welding wire to the welding torch on the forearm through a linear guide. The umbilical feeder is adapted for reciprocal motion by the linear guide.

In this conventional structure, however, the linear guide 51 is expanded upward and/or rearward of the base side of the forearm 52 and is liable to interfere with the surrounding parts. Also, the linear guide 51, unlike the torch cable 56, is so hard that the surrounding devices are liable to be broken, or the linear guide 51 itself damaged, by interference.

Further, the linear guide 51 having a linear motor or a servo motor poses the problem that the forearm is heavy and slow. Further, the high center of gravity deteriorates the stability and the vibration resistance of the robot.

EP-A-1 598 154, which belongs to the prior art according to Article 54(3) EPC, discloses a further example of a robot of the above type comprising an umbilical member handling structure with a flexible tubular guide member having a first end fixed on the second wrist element and a second end constituting a free end extended in a curve along the first wrist element and the second wrist element in the direction from the second element toward the first wrist element to guide the umbilical member between the first and the second end.

### SUMMARY OF THE INVENTION

The object of this invention is to provide an umbilical member handling structure for an industrial robot having a configuration in which the torch cable can be reciprocated longitudinally along the forearm in accordance with the motion of the wrist elements without any linear guide on the forearm, whereby the behavior of the umbilical member arranged along the robot arm is stabilized and the expansion of the extraneous part of the umbilical member upward and/or rearward of the forearm is suppressed thereby to prevent interference with the umbilical member.

In order to achieve the object described above, according to this invention, there is provided an industrial robot as defined in claim 1.

According to the invention, the umbilical member is always guided by the flexible tabular guide member and, therefore, the behavior of the umbilical member can be stabilized thereby to prevent the umbilical member from being entangled with the wrist elements. Also, the provision of the displacement limiting member mounted on the second end of the flexible tabular guide member to limit the displacement range of the second end of the flexible tabular guide member, mainly in the thickness direction of the flexible tabular guide member, while, at the same time, permitting the flexible tabular guide member to reciprocate in the longitudinal direction perpendicular to the plate thickness, can prevent the outward expansion of the flexible tabular guide member, by its own elastic restoring force, in the case where the second wrist element is rotated inward and the angle between the first and second wrist elements is reduced. As a result, the umbilical member guided over the upper surface of the flexible tabular guide member can be arranged along the first wrist element and/or the second wrist element without an upward movement of the umbilical member. Also, the provision of the insertion member near the second end of the flexible tabular guide member on the forearm, to insert thereinto the umbilical member guided by the flexible tabular guide member, allows the umbilical member to smoothly move above the forearm while being guided by the flexible tabular guide member in accordance with the motion of the wrist elements. Thus, the behavior of the umbilical member connected to the working tool can be stabilized, and the expansion of the extraneous part of the umbilical member upward and/or rearward of the forearm can be suppressed thereby to prevent the interference of the umbilical member with the parts surrounding the umbilical member. The life of the umbilical member is improved.

Also, according to this invention, there is provided an umbilical member handling structure for an industrial robot, wherein the displacement limiting member is constituted of a pair of restriction pieces arranged on the first wrist element on the opposite sides of the flexible tabular guide member, the restriction pieces respectively having engaging portions projecting from mutually opposing inner surfaces of restriction pieces in a mutually opposing direction to prevent the flexible tabular guide member from being elastically restored outward by its own elastic restoring force. Therefore, the flexible tabular guide member is prevented from being elastically restored outward, by own elastic restoring force. Also, the transverse displacement of the free end portion of the flexible tabular guide member can be prevented. As a result, the flexible tabular guide member is restricted in movement in two directions, i.e. the thickness direction and the transverse direction perpendicular to the plate thickness, thereby further stabilizing the behavior of the umbilical member.

Also, according to this invention, there is provided an umbilical member handling structure, for an industrial robot, wherein the working tool is configured of welding torch. In this aspect of the invention, the interference of the umbilical member with the surrounding parts is effectively prevented in the case where the welding work is conducted in a narrow space.

Also, according to this invention, there is provided an umbilical member handling structure, for an industrial robot, wherein the umbilical member is configured of a welding wire liner, an assist gas tube and a welding power cable, and a outer periphery of the umbilical member is covered by a flexible conduit. In this aspect of the invention, the welding wire liner, the assist gas tube and the welding power cable are bundled into a single cable. As compared with the case in which each electric wire or each tube is covered by a flexible conduit, therefore, the umbilical member can be reduced in size and weight. As a result, the operability of the umbilical member is improved while at the same time lengthening the life thereof. Also, by covering the umbilical member with the flexible conduit, the freedom of movement of the umbilical member is improved and the behavior thereof stabilized.

Also, according to this invention, there is provided an umbilical member handling structure, for an industrial robot, wherein the insertion member is arranged rotatably in such a manner as to change the direction thereof in accordance with a motion of the umbilical member. In this aspect of the invention, the motion of the umbilical member arranged upward of the forearm can be freed so that the behavior of the umbilical member can be stabilized. Also, the umbilical member is prevented from being bent or twisted and a concentration of stress at a local portion thereof is avoided, thereby preventing damage such as a disconnection.

Also, according to this invention, there is provided an umbilical member handling structure, for an industrial robot, wherein the umbilical member that has passed through the insertion member arranged in a position is offset by a predetermined amount from a position just above the forearm. In this aspect of the invention, a margin of length of the umbilical member can be formed without expansion rearward of the forearm base, and the movement of the umbilical member, due to the relative motion of the overarm and forearm and the change in position or posture of the first wrist element or the second wrist element, can be absorbed. As a result, the stress exerted on the umbilical member by bending or distortion can be reduced, while, at the same time, realizing a compact, stable umbilical member handling structure.

### BRIEF DESCRIPTION OF THE DRAWINGS

The above and other objects, features and advantages will be made more apparent by the description of preferred embodiments in conjunction with the accompanying drawings in which:
Fig. 1A is a front view showing an umbilical member handling structure for an industrial robot according to a first embodiment of the invention;
Fig. 1B is a side view showing an umbilical member handling structure for an industrial robot according to the first embodiment of the invention;
Fig. 2A is a front view showing a modification of the first embodiment of the invention;
Fig. 2B is a side view showing a modification of the first embodiment of the invention;
Fig. 3A is a front view showing an example of the behavior of the umbilical member when the forearm of the industrial robot is bent;
Fig. 3B is a side view showing an example of the behavior of the umbilical member when the forearm of the industrial robot is bent;
Fig. 3C is a front view showing an example of the behavior of the umbilical member when the forearm of the industrial robot is extended;
Fig. 3D is a front view showing an example of the behavior of the umbilical member when the forearm of the industrial robot is extended;
Fig. 4A is a front view showing an example of the behavior of the umbilical member when the first wrist element of the industrial robot is rotated 90° counterclockwise around the first axis;
Fig. 4B is a front view showing an example of the behavior of the umbilical member when the first wrist element of the industrial robot is in a reference position;
Fig. 4C is a front view showing an example of the behavior of the umbilical member when the first wrist element of the industrial robot is rotated 90° clockwise around the first axis;
Fig. 5A is a front view showing an example of the behavior of the umbilical member when the first and second wrist elements of the industrial robot are aligned;
Fig. 5B is a front view showing an example of the behavior of the umbilical member when the second wrist element is bent at right angles to the first wrist element of the industrial robot;
Fig. 5C is a front view showing an example of the behavior of the umbilical member when the second wrist element of the industrial robot is bent strongly inward (counterclockwise);
Fig. 6A is a front view showing an example of the behavior of the umbilical member when the overarm of the industrial robot is rotated about 50° counterclockwise;
Fig. 6B is a front view showing an example of the behavior of the umbilical member when the overarm of the industrial robot is vertical;
Fig. 6C is a front view showing an example of the behavior of the umbilical member when the overarm of the industrial robot is rotated about 50° clockwise;
Fig. 7A is a plan view showing an example of the behavior of the umbilical member when the swivel unit of the industrial robot is rotated about 55° counterclockwise;
Fig. 7B is a plan view showing an example of the behavior of the umbilical member when the swivel unit of the industrial robot is in a reference position;
Fig. 7C is a plan view showing an example of the behavior of the umbilical member when the swivel unit of the industrial robot is rotated about 55° clockwise;
Fig. 8 is a sectional view of the umbilical member according to the invention;
Fig. 9A is a front view showing an example of the umbilical member handling structure for an industrial robot comprising a flexible tubular guide member as disclosed in EP-A-1 598 154, which belongs to the prior art according to Article 54(3) EPC; and
Fig. 9B is a side view of the umbilical member handling structure of Fig. 9A.

### DETAILED DESCRIPTION

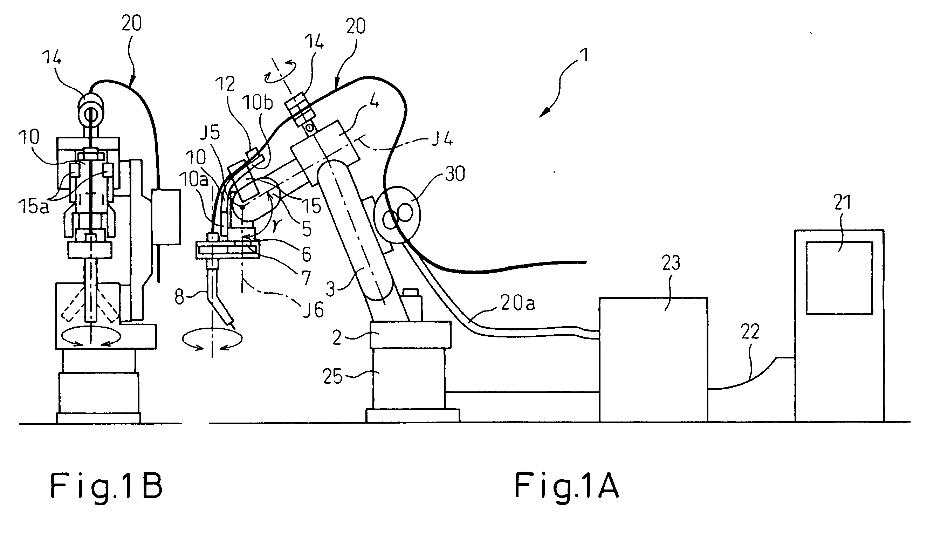

A specific example of an embodiment of the invention is explained in detail below with reference to the drawings. Figs. 1A, 1B show an umbilical member handling structure for an industrial robot according to a first embodiment of the invention. This industrial robot is substantially identical to the conventional industrial robot 50 except for a pair of restriction pieces (displacement limiting members) 15, 15 and an insertion member 14. A welding torch 8 is used as a working tool, to which the invention is not limited, but a handling tool having a suction cup or other working tools can alternatively be used.

Figs. 1A, 1B show a configuration of an arc welding robot system having a welding torch 8. A robot 1 is a multijoint arc welding robot having 6-axis freedom. The robot 1 is driven and controlled by servo motors (not shown) mounted on the drive units for six axes in response to commands from a robot controller 21 connected through a control cable 22. Thus, the welding torch 8 mounted at the forward end of the wrist is moved in a designated posture to the position of a work (part), not shown, as an object to be welded. A welding power cable 20a is led out to a welding power supply 23.

The robot 1 outputs a welding current and a welding voltage to the welding torch 8 through the welding power supply 23 as soon as an operation command is issued to the servo motor. As a result, the welding torch 8 performs the welding work in accordance with the specified welding conditions in synchronism with the operation of the robot 1.

The robot 1 is configured of a swivel unit 2 arranged on a body base 25, an overarm 3 rotatably coupled to the swivel unit 2, a forearm 4 rotatably coupled to the forward end of the overarm 3 and the welding torch 8 coupled to the forward end of the forearm 4 through a plurality of wrist elements 5, 6, 7. The swivel unit 2, the overarm 3 and the forearm 4 are rotatable around an axis J1 (not shown), an axis J2 (not shown) and an axis J3 (not shown), respectively, as rotary axes.

A plurality of the wrist elements coupled to the forearm 4 include a first wrist element 5 arranged rotatably around the longitudinal axis J4 (first axis) of the forearm 4, a second wrist element 6 arranged at the forward end of the first wrist element 5 and rotatable around the axis J5 (second axis) substantially perpendicular to the axis J4 in such a manner as to cross the first wrist element 5 at a predetermined angle of bend y, and a third wrist element 7 arranged at the forward end of the second wrist element 6 and rotatable around the axis J6 (third axis) substantially perpendicular to the axis J4. The axis J6 constitutes the last axis of the 6-axis arc welding robot 1. The welding torch (working tool) 8 is mounted rotatably around an axis parallel to, and offset by a predetermined amount from the axis J6 at the forward end of the third wrist element 7 through a transmission mechanism.

The transmission mechanism (not shown) for supporting and rotating the welding torch 8 is described below. A sixth servo motor at the forward end of the third wrist element 7 is coupled to a decelerator having built therein a bearing for supporting an output flange. The decelerator is coupled to a rotationally controlled input gear around the axis J6. A gear box housing is mounted on the output flange base portion and the welding torch 8 is rotatably mounted, through a bearing in a spaced relation with the output flange, in such a manner that the output gear integrated with the rotary shaft of the welding torch 8 is in mesh with the input gear. As a result, the welding torch 8 can be freely rotated in response to a command from the robot controller 21. This transmission mechanism is well known (it is disclosed in JP-A-2004-223576, etc.) and, therefore, not explained in detail.

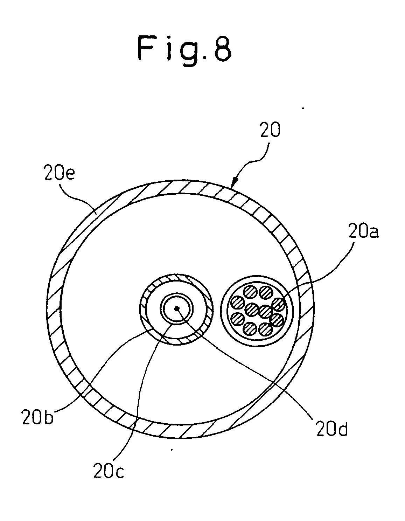

The welding torch 8 includes, connected with each other, a power cable (welding power cable) 20a making up a torch cable 20 as an umbilical member for supplying the welding current, a liner (welding wire liner) 20c for supplying a welding wire 20d, and an air tube (assist gas tube) 20b for supplying an assist gas (Fig. 8). Further, the welding torch 8 may be connected with a water cooling tube for the cooling operation. The robot 1 performs welding work while changing the arm posture and controlling the position and posture of the welding torch 8 appropriately and in accordance with the welding position. As described below, this invention is designed to prevent the torch cable 20 from interfering with the surrounding parts, from being entangled and from being disconnected when the position or posture is changed.

According to this invention, the second wrist element 6 has a flexible tabular guide member 10 whereby the torch cable 20 for supplying the welding current, the welding wire and the assist gas is guided and laid along the first and second wrist elements 5, 6. An insertion guide 12 for slidably holding the torch cable 20 on the flexible tabular guide member 10 is arranged at the free end 10b of the flexible tabular guide member 10. An insertion member 14 for holding the intermediate portion of the torch cable 20, and slidable in longitudinal direction thereof, is arranged on the rear side of the forearm 4. Further, a pair of restriction pieces (i.e., a displacement limiting member) 15, 15 is arranged at the free end 10b for limiting the operation range thereof when the tabular member 10 reciprocates in the longitudinal direction. In this way, the torch cable 20 is prevented from moving away from the overarm 3, and increasing the interference area rearward of the forearm 4, thereby stabilizing the behavior of the torch cable 20.

The flexible tabular guide member 10 is formed of a flexible material such as Teflon having a low friction coefficient. A first end of the flexible tabular guide member 10 constitutes a fixed end 10a on the second wrist element 6, and a second end thereof constitutes the free end 10b extending in a curve along the first wrist element 5 and the second wrist element 6 in the direction from the second wrist element 6 toward the first wrist element 5. The fixed end 10a has a straight portion extending in parallel to the axis J6 and having substantially the same width as the first wrist element 5. The free end 10b following the straight portion after the curved portion has a straight portion extending in parallel to the first wrist element 5 in a position offset from the first wrist element 5. Thus, the torch cable 20 is guided by the flexible tabular guide member 10 and laid along the first and second wrist elements 5, 6.

The insertion guide 12 is cylindrical and is located in the transversely central position at the free end 10b of the flexible tabular guide member 10. The insertion guide 12 is formed in such a size as allow the torch cable 20 to be inserted slidably therein without any unnecessary irregular motion. As the result of providing this insertion guide 12, the torch cable 20 is guided and laid along the first and second wrist elements 5, 6 over the flexible tabular guide member 10. The insertion guide 12 is preferably located as near as possible to an insertion member 14 described later. Specifically, an excessive space between the insertion guide 12 and the insertion guide 14 would lengthen, the portion of the torch cable 20 not guided and make stable handling of the torch cable 20 difficult. Preferably, therefore, the insertion guide 12 and the insertion member 14 are designed to be located as near to each other as possible, but without mutual interference by taking the operation range of the robot 1 into consideration.

The restriction piece pair 15, 15 is mounted at the free end 10b of the flexible tabular guide member 10 and limits the displacement range of the free end 10b in the thickness direction of the flexible tabular guide member 10 and in the transverse direction perpendicular to the thickness direction. The flexible tabular guide member 10 is thus reciprocated, by the restriction piece pair 15, 15, longitudinally to the first wrist element 5 and together with the torch cable 20. The two restriction pieces 15, 15 are arranged on both sides (opposite sides) of the flexible tabular guide member 10 and the base portions thereof are fixed on the first wrist element 5 by a fastening means such as a screw, while the forward ends thereof are projected from the upper surface of the flexible tabular guide member 10. A pair of hook portions (engaging portions) 15a is projected from mutually opposing inner surfaces of the restriction pieces 15, 15 (Fig. 1B) in a mutually opposing direction, so that the flexible tabular guide member 10 is located inside of the restriction piece pair 15, 15 and the hook portions 15a. Due to the hook portions 15a, the displacement of the flexible tabular guide member 10 in the thickness direction thereof is restricted and the displacement thereof in the transverse direction is also restricted.

The insertion member 14 is cylindrical in shape and arranged rotatably near of the free end 10b of the flexible tabular guide member 10 on the rear side of the forearm 4. The insertion member 14 and the flexible tabular guide member 10 are combined to allow the torch cable 20 to be reciprocated longitudinally above the forearm 4. As a result, the linear guide 51 (Fig. 9A) according to the prior art is eliminated and the behavior of the torch cable 20 is stabilized with a simple configuration and at low cost.

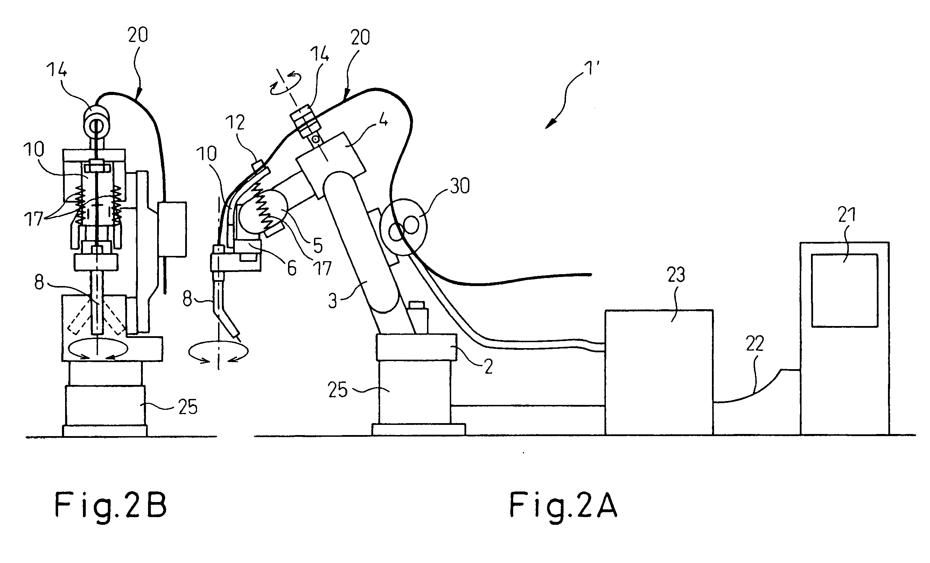

Figs. 2A, 2B show a modification of the displacement limiting member. This displacement limiting member is constituted of a spring 17 for connecting the free end of the flexible tabular guide member 10 to the first wrist element 5. The spring constant and the length of the spring 17 are arbitrarily selected in accordance with the flexibility of the flexible tabular guide member 10 and the behavior of the torch cable 20 in such a manner as to maintain a force sufficient to keep the torch cable 20 pulled toward the first wrist element 5. In the case under consideration, a pair of springs 17, 17 is arranged on both sides of the first wrist element 5. Nevertheless, a single spring may of course be alternatively arranged at the central portion of the first wrist element 5. The remaining parts of the configuration of the robot 1' are similar to those of Figs. 1A, 1B and are not explained.

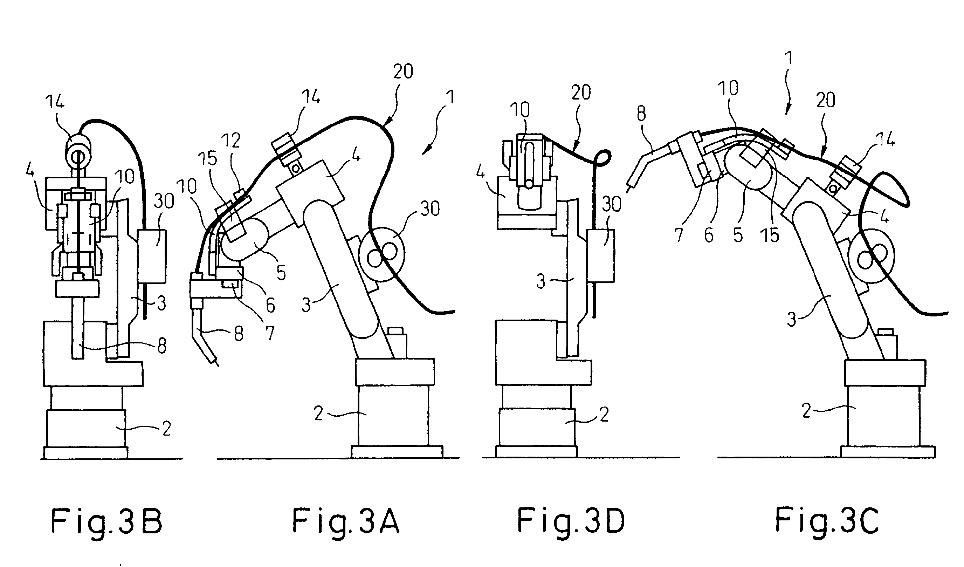

Figs. 3A to 3D are diagrams showing the behavior of the torch cable 20 with the overarm 3 and the forearm 4 adapted to rotate relative to each other according to the embodiment shown in Figs. 1A, 1B. The torch cable 20, after being supported slidably in the longitudinal direction of the torch cable 20 by the insertion member 14 above the forearm 4, is arranged while being bent rightward and is held in the intermediate portion of the overarm 3, as viewed from the side of the robot and as shown in Fig. 3D. In the handling, the torch cable 20 may be held on the overarm 3 directly or through the wire supply unit 30. The arms of the robot 1 are so configured that the overarm 3 is offset rightward, as viewed from the side of the robot. In this configuration, the torch cable 20 can absorb the stress generated in the umbilical member even at the time of relative rotation of the forearm 4 and the overarm 3. Thus, not only the life of the torch cable 20 can be secured but also stable cable handling is made possible.

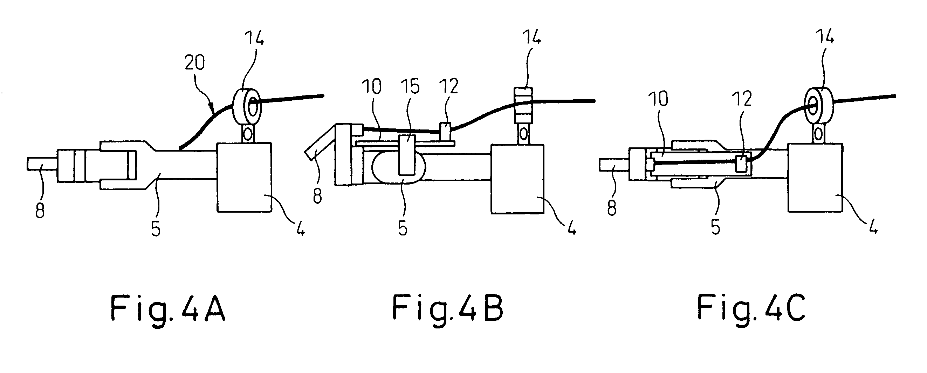

Figs. 4A to 4C are diagrams showing the behavior of the torch cable 20 at the time of rotation of the first wrist element 5. With the rotation of the first wrist element 5, the flexible tabular guide member 10 fixed on the second wrist element 6 is rotated with the first wrist element 5. The flexible tabular guide member 10 restricts the motion of the torch cable 20 by means of the insertion guide 12. The transverse displacement of the flexible tabular guide member 10 is restricted by the restriction piece pair 15, 15. As a result, the flexible tabular guide member 10 moves the torch cable 20 in such a manner as to wind on the forearm 4. The insertion member 14 holding the torch cable 20, reciprocably along the torch cable 20 above the forearm 4, is supported rotatably around an axis perpendicular to the length of the torch cable 20. Thus, the insertion member 14 changes the direction so that the torch cable 20 can wind to the wrist elements. The flexible tabular guide member 10 can also be changed in direction at the free end thereof by the restriction pieces 15 while the torch cable 20 is wound on the wrist elements. As a result, smooth handling is made possible without exerting an unreasonable force on the torch cable 20. The torch cable 20 rearward of the insertion member 14 is adjusted in length in keeping with the rotation of the forearm 4 by moving in the insertion member 14 to the required length by taking advantage of the margin in length between the overarm 3 and the forearm 4.

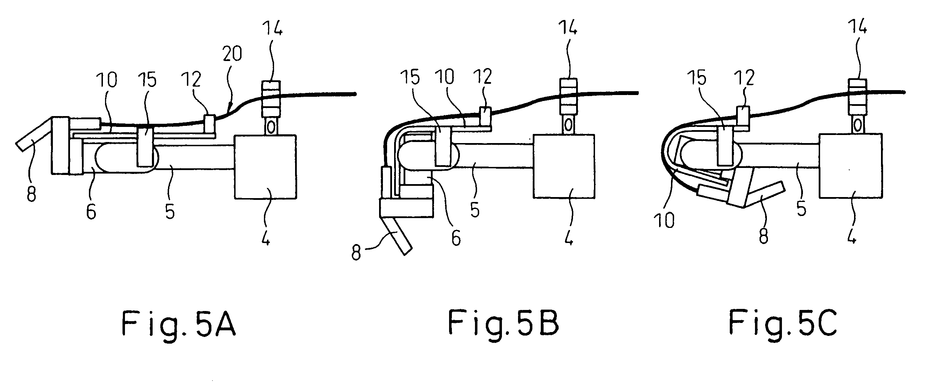

Figs. 5A to 5C are diagrams showing the behavior of the torch cable 20 at the time of swinging of the second wrist element 6. With the swinging of the second wrist element 6, the flexible tabular guide member 10 fixed on the second wrist element 6 is rotated with the second wrist element 6. The flexible tabular guide member 10 is formed of a flexible material and, while the transverse motion of the torch cable 20 is restricted by the insertion guide 12, causes the torch cable 20 to enter and leave the insertion guide 12 by the required length in accordance with the swing of the second wrist element 6. The displacement (in the thickness direction) of the flexible tabular guide member 10 expanding outward by the elastic restoring force thereof is restricted by the restriction piece pair 15, 15, so that the flexible tabular guide member 10 can be reciprocated longitudinally along the wrist elements. Specifically, the flexible tabular guide member 10 is displaced in such a manner as to circumvent the second wrist element 6 and can smoothly handle the torch cable 20 without excessively moving from the first wrist element 5 and the second wrist element 6. The marginal length of the torch cable 20 rearward of the insertion member 14 between the overarm 3 and the forearm 4 is of course adjusted as the torch cable enters and leaves the insertion member 14, by the required length, in accordance with the rotation of the forearm 4.

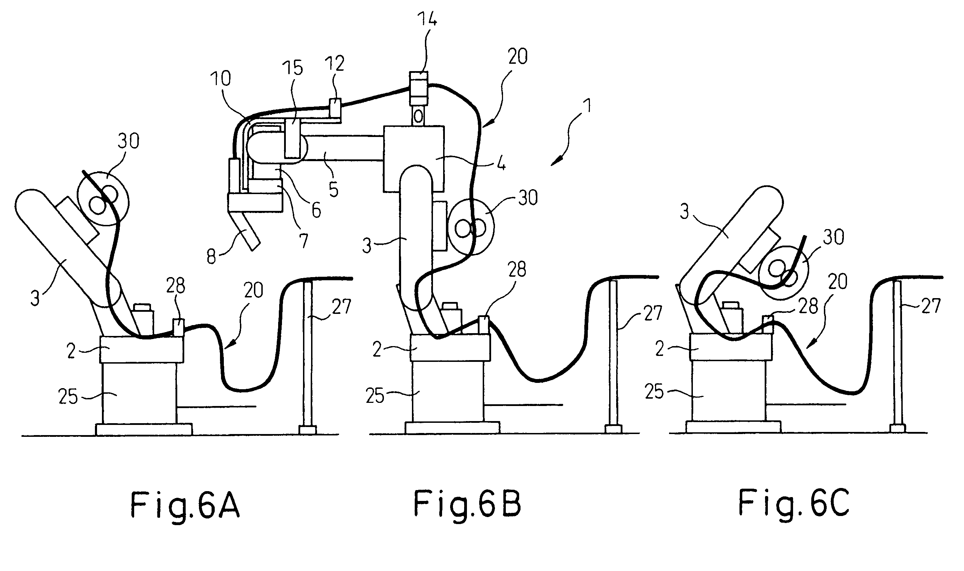

Figs. 6A to 6C are diagrams showing the behavior of the torch cable 20 at the time of swinging of the overarm 3. The torch cable 20 is held on the holder at the intermediate portion of the overarm 3 (not shown) and fixed by a clamp 28 rearward of the swivel unit 2. The provision of an appropriate margin of length between the holder at the intermediate portion of the overarm 3 and the clamp 28 rearward of the swivel unit 2 can absorb the swinging of the overarm 3 appropriately.

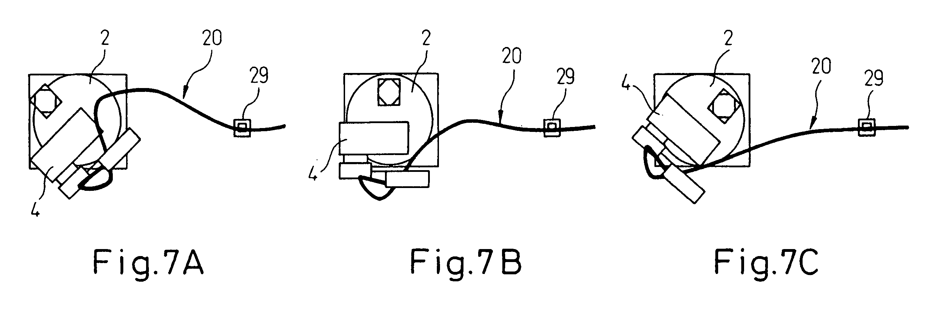

Figs. 7A to 7C are diagrams showing the behavior of the torch cable 20 at the time of rotation of the robot swivel unit 2. The torch cable 20 is fixed by a fixing portion 29 rearward of the swivel body 2 and is then connected to the welding power supply 23 and the robot controller 21. The torch cable 20 is suspended by a hanger 27 (Fig. 6B) or the like erected on the floor so that an appropriate margin of length is given to the torch cable 20 between the fixing portion 29 rearward of the swivel unit 2 and the hanger 27 at the time of rotation of the robot swivel unit 2, thereby making it possible to absorb the rotation of the swivel unit 2 appropriately. The hanger 27 can alternatively be fixed on a body base 25 not shown. As a result, the hanger 27 is not required to be erected outside the robot. Thus, both the field work load and the working space can be reduced.

The robot 1 has the 6-axis freedom and each axis performs a complicated operation. The umbilical member handling structure according to the invention realizes the umbilical member handling capable of meeting the motion of the six axes in versatile way. With regard to the rotational operation of the third wrist element 7, the welding torch 8 is mounted offset from the axis J6 as the last robot axis. In this way, the torsion exerted on the torch cable 20 is absorbed over the whole length of the torch cable 20 without changing the position of the torch cable 20. The operation of the first and second wrist elements 5, 6 are described above. Even in the case where the first to third wrist elements 5 to 7 are operated simultaneously, the umbilical member structure of the forearm portion can carry out the handling smoothly. The umbilical member can be handled as described with reference to Figs. 3A to 3D at the time of swinging of the forearm 4, as described with reference to Figs. 6A to 6C at the time of swinging of the overarm 3, and as described with reference to Figs. 7A to 7C at the time of rotation of the swivel unit 2. Especially with regard to the four axes (J3 to J6) for other than the swinging of the overarm 3 and the rotation of the swivel unit 2, the various handling patterns of the robot can be met by use of the umbilical member handling structure according to the invention.

Fig. 8 is a sectional view of the torch cable 20. In this structure, the wire 20d and the assist gas tube 20b are passed substantially through the center of the flexible conduit 20e while the welding power supply cable 20a is passed through a position offset by a predetermined amount from the axis. The torsion which may be exerted on the torch cable 20 can be absorbed by the whole length of the cable 20 due to the small diameter. A torsion absorbing structure is also possible by winding the torch cable 20 spirally around the assist gas tube 20b. By dividing the welding power cable 20a into a plurality of wires, the diameter of each wire can be further reduced and the life further lengthened. Also, a mass of thin strands twisted and bundled into a multicore conductor can be used to further lengthen the service life.

The torch cable 20 is covered by the conduit 20e. At the time of robot operation shown in Figs. 4A to 4C and Figs. 5A to 5C, therefore, the internal wires are kept out of direct contact with the forearm, thereby further lengthening the life of the torch cable 20.

As described above, according to the embodiments of the invention, the torch cable 20 connected to the welding torch 8 can be laid along the forearm 4 in a simple configuration with the behavior thereof stabilized without moving excessively upward and rearward of the forearm 4.

This invention is explained above with reference to preferred embodiments thereof and it will be understood, by those skilled in the art, that the invention can be variously corrected or modified without departing from the scope of the appended claim.

## Claims

1. An industrial robot (1) comprising a first wrist element (5) arranged rotatably at a forward end of a forearm (4), a second wrist element (6) arranged rotatably at a forward end of the first wrist element (5), a working tool (8) arranged at a forward end of the second wrist element (6), an umbilical member (20) connected to the working tool (8) and arranged along the first wrist element (5) and the second wrist element (6) and an umbilical member handling structure the umbilical member handling structure comprising : a flexible tabular guide member (10) having a first end fixed on the second wrist element (6) and a second end constituting a free end extended in a curve along the first wrist element (5) and the second wrist element (6) in the direction from the second wrist of element (6) toward the first wrist element (5) to guide the umbilical member (20) between the first end and the second end;
a displacement limiting member (15) mounted at the second end of the flexible tabular guide member (10) to limit a displacement of the second end, mainly in a thickness direction of the flexible tabular guide member (10); and
an insertion member (14) arranged near the second end of the flexible tabular guide member (10) on the forearm (4) to have inserted thereinto the umbilical member (20) guided by the flexible tabular guide member (10).

2. An industrial robot (1) according to claim 1,
wherein the displacement limiting member (15) comprises a pair of restriction pieces arranged on the first wrist element (5) on the opposite sides of the flexible tabular guide member (10), the restriction pieces respectively having engaging portions (15a) projecting from mutually opposing inner surfaces of the restriction pieces in a mutually opposing direction to prevent the flexible tabular guide member from being elastically restored outward by its own elastic restoring force.

3. An industrial robot (1) according to claim 1,
wherein the working tool (8) comprises a welding torch.

4. An industrial robot (1) according to claim 3,
wherein the umbilical member (20) comprises a welding wire liner, an assist gas tube and a welding power cable, and a outer periphery of the umbilical member (20) is covered by a flexible conduit (20b).

5. An industrial robot (1) according to claim 1,
wherein the insertion member (14) is arranged rotatably in such a manner as to change a direction thereof in accordance with a motion of the umbilical member (20).

6. An industrial robot (1) according to claim 5,
wherein the umbilical member (20) that has passed through the insertion member (14) is arranged in a position offset by a predetermined amount from a position just above the forearm (4).

## Patentansprüche

1. Industrieroboter (1) mit einem ersten drehbar an einem vorderen Ende eines Vorderarms (4) angebrachten Gelenkelement (5), einem zweiten drehbar an dem vorderen Ende des ersten Gelenkelements (5) angebrachten Gelenkelement (6), einem an einem vorderen Ende des zweiten Gelenkelements (6) angebrachten Werkzeug (8), einer mit dem Werkzeug (8) verbundenen und entlang des ersten Gelenkelements (5) und des zweiten Gelenkelements angeordneten Versorgungsleitung (20), und einer Anordnung zum Handhaben von Versorgungsleitungen, wobei die Anordnung zum Handhaben von Versorgungsleitungen aufweist:
ein flexibles flaches Führungselement (10) mit einem ersten an dem zweiten Gelenkelement (6) angebrachten Ende und einem zweiten Ende, das ein sich in einer Krümmung entlang des ersten Gelenkelements (5) und des zweiten Gelenkelements (6) in einer Richtung von dem zweiten Gelenkelement (6) zu dem ersten Gelenkelement (5) erstreckendes freies Ende bildet, um die Versorgungsleitung (20) zwischen dem ersten Ende und dem zweiten Ende zu führen;
ein Auslenkungsbegrenzungsmittel (15), das an dem zweiten Ende des flexiblen flachen Führungselements (10) befestigt ist, um eine Auslenkung des zweiten Endes, insbesondere in einer Richtung der Dicke des flexiblen flachen Führungselements (10), zu begrenzen; und
ein nahe des zweiten Endes des flexiblen flachen Führungselements (10) an dem Vorderarm (4) angebrachtes Einlageelement (14), in das die von dem flexiblen flachen Führungselement (10) geführte Versorgungsleitung (20) eingelegt ist.

2. Industrieroboter (1) nach Anspruch 1, wobei das Auslenkungsbegrenzungsmittel (15) ein Paar von Begrenzungsstücken aufweist, die an dem ersten Gelenkelement (5) an entgegengesetzten Seiten des flexiblen flachen Führungselements (10) angeordnet sind, wobei die Begrenzungsstücke jeweils Eingriffabschnitte (15a) aufweisen, die von einander gegenüberliegenden inneren Flächen der Begrenzungsstücke in einer einander gegenüberliegender Richtung vorstehen, um zu verhindern, dass das flexible flache Führungselement elastisch nach außen durch seine eigene elastische Rückstellungskraft zurückgestellt wird.

3. Industrieroboter (1) nach Anspruch 1, wobei das Werkstück (8) einen Schweißbrenner aufweist.

4. Industrieroboter (1) nach Anspruch 3, wobei die Versorgungsleitung ein Schweißdrahtrohr, ein Schutzgasrohr und ein Schweißstromkabel aufweist, und wobei ein Außenumfang der Versorgungsleitung (20) von einem nachgiebigen Kanal (20b) umgeben ist.

5. Industrieroboter (1) nach Anspruch 1, wobei das Einlageelement (14) derart drehbar angeordnet ist, dass es die Richtung in Übereinstimmung mit einer Bewegung der Versorgungsleitung (20) ändert.

6. Industrieroboter (1) nach Anspruch 5, wobei die Versorgungsleitung (20), die durch das Einlageelement (14) verläuft, in einer um ein vorbestimmtes Maß versetzten Position von einer Position gerade oberhalb des Vorderarms (4) angeordnet ist.

## Revendications

1. Robot industriel (1) comprenant un premier élément de poignet (5) agencé de manière rotative au niveau d'une extrémité avant d'un avant-bras (4), un deuxième élément de poignet (6) agencé de manière rotative au niveau d'une extrémité avant du premier élément de poignet (5), un outil de travail (8) agencé au niveau d'une extrémité avant du deuxième élément de poignet (6), un élément ombilical (20) connecté à l'outil de travail (8) et agencé le long du premier élément de poignet (5) et du deuxième élément de poignet (6) et une structure de manipulation de l'élément ombilical comprenant :
un élément de guidage tabulaire flexible (10) possédant une première extrémité fixée sur le deuxième élément de poignet (6) et une deuxième extrémité constituant une extrémité libre déployée en une courbe le long du premier élément de poignet (5) et du deuxième élément de poignet (6) dans la direction partant du deuxième élément de poignet (6) vers le premier élément de poignet (5) pour guider l'élément ombilical (20) entre la première extrémité et la deuxième extrémité ;
un élément de limitation de déplacement (15) monté au niveau de la deuxième extrémité de l'élément de guidage tabulaire flexible (10) pour limiter un déplacement de la deuxième extrémité, principalement dans le sens de l'épaisseur de l'élément de guidage tabulaire flexible (10) ; et
un élément d'insertion (14) agencé à proximité de la deuxième extrémité de l'élément de guidage tabulaire flexible (10) sur l'avant-bras (4) destiné à permettre l'insertion dans celui-ci de l'élément ombilical (20) guidé par l'élément de guidage tabulaire flexible.

2. Robot industriel (1) selon la revendication 1,
dans lequel l'élément de limitation de déplacement (15) comprend une paire de pièces de restriction agencées sur le premier élément de poignet (5) sur les côtés opposés de l'élément de guidage tabulaire flexible (10), les pièces de restriction présentant respectivement des parties de prise (15a) dépassant depuis des surfaces internes se faisant mutuellement face des pièces de restriction dans des directions mutuellement opposées pour empêcher l'élément de guidage tabulaire flexible d'être rappelé élastiquement vers l'extérieur par sa propre force de rappel élastique.

3. Robot industriel (1) selon la revendication 1,
dans lequel l'outil de travail (8) comprend un chalumeau soudeur.

4. Robot industriel (1) selon la revendication 3,
dans lequel l'élément ombilical (20) comprend une gaine de fil à souder, un tube de gaz de soufflage et un câble d'alimentation de soudure, et une périphérie externe de l'élément ombilical (20) est recouverte d'un conduit flexible (20b).

5. Robot industriel (1) selon la revendication 1,
dans lequel l'élément d'insertion (14) est agencé de manière rotative de telle manière à changer une direction de celui-ci en fonction d'un mouvement de l'élément ombilical (20).

6. Robot industriel (1) selon la revendication 5,
dans lequel l'élément ombilical (20) qui traverse l'élément d'insertion (14) est agencé à un emplacement décalé d'une distance prédéterminée depuis un emplacement juste au-dessus de l'avant-bras (4).
